# EUROPÄISCHE PATENTANMELDUNG

(11) **EP 3 988 230 A1**
(43) Veröffentlichungstag der Anmeldung: **27.04.2022**
(21) Anmeldenummer: 20203507.7
(22) Anmeldetag: 23.10.2020
(51) Int. Cl.: B22F 9/08

(54) **GRANULIERVORRICHTUNG MIT KONTINUIERLICHER PRODUKTAUSSCHLEUSUNG**

(71) Anmelder: Heraeus Deutschland GmbH & Co. KG, 63450 Hanau (DE)
(72) Erfinder: KRÄMER, Winfried, 63450 Hanau (DE)
(74) Vertreter: Schultheiss & Sterzel Patentanwälte PartG mbB

(57) **Zusammenfassung**

Die Erfindung betrifft eine Vorrichtung zum Granulieren von Metallen und Metalllegierungen aufweisend ein Granulierbecken (1), wobei eine Kühlflüssigkeit (2) in dem Granulierbecken (1) angeordnet ist, eine Einmündung (3) zum Einleiten einer Metallschmelze (4) in das Granulierbecken (1), so dass Granalien (5) durch Erstarren der Metallschmelze (4) in der Kühlflüssigkeit (2) herstellbar sind, einen Strömungsantrieb (6) zum Antreiben einer zirkularen Strömung der Kühlflüssigkeit (2), einen Abfluss (7) am Boden (40) des Granulierbeckens (1), eine Trenneinrichtung (8) und eine Kühlleitung (9), wobei die Kühlleitung (9) über den Abfluss (7) mit dem Granulierbecken (1) für die Kühlflüssigkeit (2) und die Granalien (5) durchlässig verbunden ist und wobei die Kühlleitung (9) in die Trenneinrichtung (8) mündet.

Die Erfindung betrifft auch ein Verfahren zur Herstellung eines Granulats.

## Beschreibung

Die Erfindung betrifft eine Vorrichtung und ein Verfahren zur Herstellung eines Granulats aus einer Metallschmelze.

Metalle und metallische Zusammensetzungen werden bei der Prozessierung gerne in Form von Granulaten verwendet. Hierzu werden die entsprechenden Metallschmelzen in einer Kühlflüssigkeit wie Wasser erstarrt. Um eine feinere Granulierung zu erreichen, werden die Metallschmelzen zuvor häufig vereinzelt, wobei die Metallschmelze hierzu in Tropfen getrennt wird. Die Granalien lagern sich dabei auf dem Boden eines Granulierbeckens ab, der die Kühlflüssigkeit enthält.

Aus der GB 125 238 A, der DE 44 17 100 A1 und der EP 2 181 785 A1 sind Vorrichtungen und Verfahren zur Herstellung eines metallischen Granulats bekannt, mit denen beziehungsweise bei denen Granalien im Batchbetrieb produziert werden. Die Metallschmelze wird langsam in ein Wasserbad mit starker Strömung abgegossen und dabei in kleine Schmelztropfen vereinzelt, die rasch erstarren. Die erstarrten Schmelztropfen werden als Granalien bezeichnet und sind das Produkt des Prozesses. Dabei wird eine zirkulare Strömung des Wassers als Kühlflüssigkeit in einem Granulierbecken erzeugt, in dem die Granalien entstehen und erstarren. Die kreisförmige Wasserströmung erzeugt einen längeren Kontaktweg der Schmelztropfen mit dem Wasser, um für eine längere und damit stärkere Abkühlung zu sorgen. Hierdurch wird die notwendige Behälterhöhe reduziert und eine kompakte Bauform ermöglicht. Nach der Granulierung müssen die Granalien aus dem Granulierbecken und der Kühlflüssigkeit (dem Prozesswasser) entnommen werden, was einen erheblichen zeitlichen Aufwand und Beschwernisse für die Anwender bedeutet. Die Granalien müssen für jedes Schmelzlos aus dem Granulierbecken entnommen werden und das Granulierbecken muss rückstandsfrei gereinigt werden. Die Losgrößen solcher Batchbetriebe beträgt bei Edelmetallen, insbesondere bei Platin und Platingruppenmetallen, etwa 10 kg bis 50 kg. Es wäre wünschenswert, wenn die körperliche Belastung des Personals beim Entnehmen der Granalien geringgehalten werden könnte. Gleichzeitig soll das Granulierbecken aber möglichst schnell geleert werden und wieder für das nächste Schmelzlos verfügbar sein.

Bei der GB 233 720 A erfolgt eine Vereinzelung der Metallschmelze mit Hilfe eines sich drehenden Schlägers. Anschließend sinken die Granalien auf den Boden eines Granulierbeckens enthaltend eine Kühlflüssigkeit. Der sich drehende Schläger muss nach der Verwendung gereinigt werden und es entsteht ein Verlust an Metallschmelze, der insbesondere bei teuren Metallschmelzen wie Edelmetallschmelzen unerwünscht ist.

Die EP 0 522 844 A2 offenbart ein Verfahren zur Herstellung eines Silizium-Magnesium-Granulats, bei dem ein Gießstrahl der Metallschmelze direkt in eine strömende Kühlflüssigkeit in einem Granulierbecken geleitet wird und mit einem Förderband aus dem Granulierbecken gefördert wird. Dabei kann es zu einem Verklumpen und einer Verformung der erzeugten Granalien kommen, wenn das Granulierbecken nicht extrem tief und voluminös ist.

Aus der WO 01/55462 A1, der WO 03/106012 A1, der US 4192673 A und der CN 102329902 A sind Verfahren und Vorrichtungen zur Herstellung eines Granulats bekannt, bei denen eine Vereinzelung der Metallschmelze erfolgt, bevor die dadurch entstehenden Tropfen der Metallschmelze in Wasser abgeschreckt und abgekühlt werden. Zum Teil erfolgt auch eine Kühlung der Metallschmelze mit Hilfe des Gasstroms. Die fertigen Granalien können anschließend auf eine Förderanlage fallen und mit der Förderanlage zu einer Sammelstelle gefördert werden.

Diese Verfahren haben den Nachteil, dass die Granalien häufig unregelmäßig geformt sind, beispielsweise als Flakes, was die nachfolgende Prozessierung erschweren kann. Zu einer Verformung kann es auch nach der ersten Erstarrung kommen, wenn das Innere der abgeschreckten Schmelztropfen noch flüssig ist oder Verspannungen im Material auftreten, die zu einem Zerbrechen der Granalien führen können auch noch während der Förderung mit der Förderanlage. Des Weiteren kann es auch zu einem Verklumpen mehrerer einzelner Granalien kommen und dadurch die mittlere Korngröße des Granulats negativ beeinflusst werden.

Die Aufgabe der Erfindung besteht also darin, die Nachteile des Stands der Technik zu überwinden. Insbesondere sollen eine Vorrichtung und ein Verfahren zur Herstellung eines Granulats aus einer Metallschmelze gefunden werden, mit denen gleichmäßig dicke und leicht prozessierbare Granalien erzeugt werden können. Die Granalien sollen möglichst eine runde Form haben und nicht verklumpen. Es besteht stets das Bedürfnis, die Vorrichtung und das Verfahren kostengünstiger zu gestalten und die Prozesszeiten möglichst kurz zu halten. Die Vorrichtung soll möglichst kompakt und einfach aufgebaut sein. Zudem soll die Vorrichtung aber auch leicht zu warten sein. Im Havariefall, nämlich ein unkontrolliertes Auslaufen der Schmelze, beispielsweise nach einem Tiegelbruch, soll eine nachhaltige Zerstörung der Vorrichtung vermieden werden und die ausgetretenen Elemente der Metallschmelze sollen möglichst wieder zu bergen sein. Ein Verlust von Elementen der Metallschmelze soll möglichst vermieden werden, insbesondere wenn diese Edelmetalle enthält.

Ziel der Granulierung sind kleine, möglichst gleichmäßige Granalien die im nachfolgenden Recycling-Prozess oder Refining-Prozess einfacher handhabbar und zum Beispiel schneller in Säuren lösbar sind. Die Granaliengröße mit mittleren Durchmessern zwischen 0,5 mm und 5 mm soll möglichst variabel und reproduzierbar einstellbar sein. Gleichzeitig mit der Steuerbarkeit der Granaliengröße und Granalienform soll also auch das Handling der Granalien bei der Entnahme verbessert werden.

Die Aufgaben der Erfindung werden gelöst, durch eine Vorrichtung zum Granulieren von Metallen und Metalllegierungen, die Vorrichtung aufweisend
ein Granulierbecken zur Aufnahme einer Kühlflüssigkeit, wobei eine Kühlflüssigkeit in dem Granulierbecken angeordnet ist oder in das Granulierbecken einfüllbar ist,
eine Einmündung zum Einleiten einer Metallschmelze in das Granulierbecken, so dass die Metallschmelze in die Kühlflüssigkeit in dem Granulierbecken einleitbar ist und Granalien durch Erstarren der Metallschmelze in der Kühlflüssigkeit herstellbar sind, einen Strömungsantrieb zum Antreiben einer zirkularen Strömung der Kühlflüssigkeit in dem Granulierbecken,
einen Abfluss, der an einem Boden des Granulierbeckens angeordnet ist,
eine Trenneinrichtung zum Trennen der Granalien von der Kühlflüssigkeit, und
eine Kühlleitung zum weiteren Abkühlen der Granalien in der Kühlflüssigkeit und zum Leiten der Kühlflüssigkeit und der von der Kühlflüssigkeit mitgeschwemmten Granalien von dem Granulierbecken zur Trenneinrichtung, wobei die Kühlleitung über den Abfluss mit dem Granulierbecken für die Kühlflüssigkeit und die Granalien durchlässig verbunden ist und wobei die Kühlleitung in die Trenneinrichtung mündet.

Unter einer Metallschmelze wird analog der EP 2 181 785 A1 eine Schmelze aus einem oder aus mehreren Metallen und/oder Halbleitern verstanden, die auch nicht metallische und nicht halbleitende Komponenten enthalten kann, wobei vorzugsweise wenigstens die Hälfte der Elemente der Metallschmelze Metalle sind. Da Halbleiter wie Silizium bei hohen Temperaturen wie deren Schmelzpunkt eine metallische Leitfähigkeit aufweisen, ist diese Definition vorliegend zweckmäßig.

Bevorzugt ist der Strömungsantrieb zum Antreiben einer spiralförmigen Strömung geeignet und vorgesehen.

Der Strömungsantrieb kann zumindest eine Öffnung in einer Seitenwand des Granulierbeckens aufweisen, durch die die Kühlflüssigkeit tangential in das Granulierbecken einleitbar beziehungsweise einspritzbar ist. Bevorzugt bewirken alle Öffnungen einen Kühlflüssigkeitsstrom in der gleichen tangentialen Richtung. Ebenfalls bevorzugt kann vorgesehen sein, dass die zumindest eine Öffnung in der Seitenwand des Granulierbeckens in einer unteren Hälfte des Granulierbeckens angeordnet ist, die einem Boden des Granulierbeckens zugewandt ist.

Bevorzugt kann vorgesehen sein, dass die Strömung der Kühlflüssigkeit in der Kühlleitung eine in erster Näherung lineare Strömung ist.

Die Kühlflüssigkeit ist erfindungsgemäß bevorzugt Wasser.

Die Kühlleitung kann erfindungsgemäß bevorzugt ein Kühlrohr sein oder mit zumindest einem Kühlrohr aufgebaut sein.

Bevorzugt weisen alle Teile der Vorrichtung, die zum Leiten und Führen der Kühlflüssigkeit mit den Granalien dienen, insbesondere die Kühlleitung und das Granulierbecken, glatte Oberflächen auf.

Damit Granalien durch Erstarren der Metallschmelze in der Kühlflüssigkeit herstellbar sind, muss die Metallschmelze beim Einleiten in die Kühlflüssigkeit vereinzelt werden. Dies kann von einer Vielzahl von Parametern abhängen, wie der Temperatur und Viskosität der Metallschmelze, der Kühlflüssigkeit, dem Volumen der Kühlflüssigkeit, der Bewegung der Kühlflüssigkeit, der Strömungsgeschwindigkeit der Metallschmelze beim Einleiten, die dem Fachmann geläufig sind. Der Fachmann kann ohne weiteres geeignete Rahmenbedingungen finden, bei denen eine Granulierung möglich ist. Es reicht zur Realisierung des Merkmals aus, dass irgendeine Metallschmelze beim Einleiten in die Kühlflüssigkeit Granalien bildet. Hierzu ist es ausreichend, wenn die Einmündung so angeordnet ist, dass die Metallschmelze in die Kühlflüssigkeit fließen kann.

Es kann vorgesehen sein, dass eine mechanische Trennvorrichtung zur Aufteilung des Gießstrahls zwischen der Einmündung und der Kühlflüssigkeit beziehungsweise dem Bereich für die Kühlflüssigkeit angeordnet ist. Mit der mechanischen Trennvorrichtung kann der Gießstrahl aufgeteilt werden, um die Granulierung zu vereinfachen. Als Trennvorrichtung können beispielsweise Lochplatten, Prallplatten, gelochte Gießrinnen oder Tiegel verwendet werden.

Bevorzugt ist das erfindungsgemäße Verfahren ein Hochtemperatur-Granulierungsprozess für Platinmetalle und deren Legierungen und die erfindungsgemäße Vorrichtung eine Hochtemperatur-Granulierungsvorrichtung für Platinmetalle und deren Legierungen. Diese Platinmetalle und diese Platinmetall-Legierungen werden bei Temperaturen von über 2000°C bis zu 2500°C geschmolzen. Im Granulierungsprozess werden die Platinmetalle und die schmelzflüssigen Platinmetall-Legierungen (die Metallschmelze) zu Granalien verarbeitet.

Es kann vorgesehen sein, dass die Kühlleitung zumindest 0,5 m lang ist, bevorzugt zumindest 1 m lang ist, besonders bevorzugt zwischen 1 m und 3 m lang ist.

Durch die Mindestlänge der Kühlleitung wird sichergestellt, dass eine ausreichende Kühlung der Granalien in der Kühlflüssigkeit erreicht wird. Die Länge der Kühlleistung kann dabei auf den Leitungsquerschnitt der Kühlleitung und auf den durchschnittlichen Querschnitt (die durchschnittliche Granaliengröße) der Granalien abgestimmt sein. Je größer die Granalien durchschnittlich sind, desto länger sollte die Kühlleitung sein. Die durchschnittliche Granaliengröße kann beispielsweise mit einer Siebung mit mehreren und immer kleiner werdenden Maschenweiten ermittelt werden.

Des Weiteren kann vorgesehen sein, dass die Vorrichtung eine Antriebseinrichtung zum Antreiben einer linearen Strömung der Granalien mit der Kühlflüssigkeit durch die Kühlleitung aufweist, wobei bevorzugt die Antriebseinrichtung zumindest ein in die Kühlleitung eingespeister Kühlflüssigkeitsstrom, eine Pumpe und/oder ein Gefälle der Kühlleitung ist.

Unter einer linearen Strömung wird vorliegend eine Strömung durch die Kühlleitung entlang ihrer Länge verstanden. Die lineare Strömung muss also nicht gerade sein und wird im Allgemeinen auch nicht einer geraden Linie folgen, da die Kühlleitung zumindest einen Rohrbogen, Knicke oder Biegungen aufweisen kann. Es kann sogar vorgesehen sein, dass die Kühlleitung sich in mehrere Einzelleitungen aufspaltet. Diese Einzelleitungen können wieder zusammengeführt werden oder in verschiedene Bereiche der Trenneinrichtung in die Trenneinrichtung einmünden.

Durch die Antriebseinrichtung wird sichergestellt, dass eine für die Kühlung der Granalien und für den Transport der Granalien ausreichende Strömungsgeschwindigkeit der Kühlflüssigkeit in der Kühlleitung erreicht wird.

Es kann vorgesehen sein, dass die Kühlleitung eine Höhe überwindet, die mindestens so hoch ist wie der Füllstand im Granulierbecken. Dadurch kann das Granulierbecken den Füllstand auch ohne Ventile halten, auch wenn alle Pumpen ausgeschaltet sind.

Bevorzugt kann dabei vorgesehen sein, dass die Antriebseinrichtung die Strömungsgeschwindigkeit in der Kühlleitung beschleunigt. Hierdurch wird eine stärkere Kühlung in der Kühlleitung als in dem Granulierbecken erreicht.

Ferner kann vorgesehen sein, dass die Vorrichtung aufweisend eine Vereinzelungseinrichtung mit der die Metallschmelze vor, während oder unmittelbar nach dem Einfließen in die Kühlflüssigkeit zu vereinzeln oder zu zerstäuben ist, wobei bevorzugt die Vereinzelungseinrichtung eine Prallplatte und/oder eine Kühlflüssigkeitsdüse zum Erzeugen eines Sprühkegels der Kühlflüssigkeit ist, wobei besonders bevorzugt die Kühlflüssigkeitsdüse derart angeordnet ist, dass der Sprühkegel die in das Granulierbecken fließende Metallschmelze trifft, bevor die Metallschmelze in die Kühlflüssigkeit fließt.

Durch die Vereinzelungseinrichtung wird die Metallschmelze in einzelne Tropfen getrennt, bevor sie in der Kühlflüssigkeit erstarrt. Hierdurch können kleinere und rundere beziehungsweise kugelförmigere Granalien erzeugt werden, als wenn nur die Strömung der Kühlflüssigkeit die Vereinzelung der Metallschmelze bewirkt.

Die Kühlflüssigkeitsdüse kann austauschbar sein. Bevorzugt kann die Kühlflüssigkeitsdüse an das zu erzeugende Granulat, beziehungsweise an das Material für das zu erzeugende Granulat angepasst werden.

Dabei kann vorgesehen sein, dass die Kühlflüssigkeitsdüse von einem Außenrohr umgeben ist, das oben in die Kühlflüssigkeit im Granulierbecken eintaucht ist und das bevorzugt nach oben bis auf die Einmündung gasdicht verschlossen oder verschließbar ist.

Hierdurch kann in dem Außenrohr ohne großen Aufwand eine Inertgasatmosphäre erzeugt werden. Das Außenrohr kann beispielsweise dadurch geschlossen sein, dass oben an das Außenrohr eine geschlossene evakuierbare Kammer angeschlossen ist.

Es kann auch vorgesehen sein, dass das Granulierbecken oder ein Raum über dem Granulierbecken geschlossen ist oder verschließbar ist und in dem Granulierbecken oder in dem Raum über dem Granulierbecken eine Inertgasatmosphäre erzeugbar ist, so dass in dem Granulierbecken über der Kühlflüssigkeit ein Inertgas angeordnet ist oder einleitbar ist.

Hierdurch kann eine chemische Reaktion der Metallschmelze mit der umgebenden Atmosphäre verhindert werden, bevor die Metallschmelze in die Kühlflüssigkeit eingeleitet ist. Es kann aber auch einzelnen Anwendungen geben, bei denen einer chemische Reaktion zwischen der Metallschmelze und der Gasatmosphäre oder auch der Kühlflüssigkeit erwünscht ist.

Bevorzugt kann auch vorgesehen sein, dass in der Kühlleitung ein Volumenstrom der Kühlflüssigkeit mit den Granalien von zumindest 10⁻³ m³/s erzeugbar ist, bevorzugt von zumindest 10⁻² m³/s erzeugbar ist.

Hiermit wird sichergestellt, dass durch die Strömung der Kühlflüssigkeit eine hohe relative Strömung zwischen den Granalien und der Kühlflüssigkeit erzeugbar ist. Diese bewirkt eine stärkere Kühlung der Granalien in der Kühlflüssigkeit. Auch hier gilt, dass die Kühlleistung von weiteren Parametern abhängt, wie beispielsweise dem Dichteunterschied zwischen den Granalien und der Kühlflüssigkeit, der Oberflächenbeschaffenheit der Granalien, der Benetzbarkeit der Granalien durch die Kühlflüssigkeit, der Wärmekapazität der Kühlflüssigkeit und dem Wärmeübergangswiderstand zwischen der Oberfläche der Granalien und der Kühlflüssigkeit.

Mit einer Weiterbildung der vorliegenden Erfindung kann vorgesehen sein, dass die Vorrichtung zusätzlich eine Schmelzeinrichtung zum Herstellen der Metallschmelze aufweist, wobei bevorzugt die Schmelzeinrichtung eine induktive Schmelzeinrichtung ist.

Hierdurch wird die Vorrichtung weiter komplettiert. Die Vorrichtung benötigt dann nur noch die Ausgangsmaterialien zur Herstellung der Metallschmelze, um die Granalien aus der Metallschmelze herstellen zu können.

Ferner kann vorgesehen sein, dass zumindest eine Öffnung zum Einleiten von Kühlflüssigkeit in einer Wandung der Kühlleitung angeordnet ist, wobei bevorzugt die zumindest eine Öffnung an wenigstens eine Kühlflüssigkeitszuleitung angeschlossen ist.

Hiermit kann die Strömung der Kühlflüssigkeit mit den mitgeschwemmten Granalien sowie die auf die Granalien wirkende Kühlleistung in der Kühlleitung eingestellt werden. Die zumindest eine Öffnung zum Einleiten von Kühlflüssigkeit kann bevorzugt als zumindest eine Düse ausgeformt sein.

Auch kann vorgesehen sein, dass in der Kühlleitung zumindest ein Rohrbogen angeordnet ist, wobei bevorzugt der zumindest eine Rohrbogen oder wenigstens einer von zumindest zwei Rohrbögen der Kühlleitung ein dünnwandiger Rohrbogen aus einem niedrigschmelzenden Material ist, insbesondere aus Kunststoff, Kupfer, Aluminium ist, wobei besonders bevorzugt die Stärke der Wandung des dünnwandigen Rohrbogens maximal 2 mm beträgt, ganz besonders bevorzugt 1 mm beträgt.

Hierdurch kann zum einen die Strömung der Kühlflüssigkeit und dadurch die auf die Granalien wirkende Kühlleistung in der Kühlleitung beeinflusst werden und zum anderen kann hierdurch ein Sicherheitsmechanismus realisiert werden. Der Rohrbogen schmilzt im Havariefall, wenn beispielsweise ein Tiegel enthaltend die Metallschmelze bricht oder unkontrolliert ausfließt. Zum Auffangen der Metallschmelze kann hierzu ein Havariebehälter zum Auffangen der Metallschmelze vorgesehen sein, der unterhalb des Rohrbogens angeordnet ist, insbesondere unterhalb des dünnwandigen Rohrbogens angeordnet ist.

Dabei kann vorgesehen sein, dass der zumindest eine Rohrbogen zwischen dem Granulierbecken und einem geraden oder weniger stark gebogenen Teilstück der Kühlleitung angeordnet ist, wobei in einer Wandung wenigstens eines Rohrbogens des zumindest einen Rohrbogens eine Einlassöffnung zum Einleiten oder Einspritzen von Kühlflüssigkeit angeordnet ist, wobei mit der eingeleiteten oder eingespritzten Kühlflüssigkeit der Volumenstrom der Kühlflüssigkeit mit den Granalien durch die Kühlleitung anzutreiben und/oder zu beschleunigen ist.

Hierdurch wird der Strom der Kühlflüssigkeit zum Transport und zum Kühlen der Granalien angetrieben. Die Einlassöffnung für die Kühlflüssig kann bevorzugt als Düse ausgeformt sein. Durch das Einleiten oder Einspritzen können in der Kühlleitung Turbulenzen erzeugt werden, die die Abkühlung der Granalien in der Kühlleitung verstärkt.

Des Weiteren kann vorgesehen sein, dass die Vorrichtung eine Kühlflüssigkeitsrückgewinnungseinrichtung aufweist, die mit der Trenneinrichtung und dem Granulierbecken verbunden ist, wobei bevorzugt in der Kühlflüssigkeitsrückgewinnungseinrichtung einen Abscheider, insbesondere einen Zyklonabscheider, und/oder eine Zentrifuge zum Abscheiden von Partikeln aus der Kühlflüssigkeit aufweist und/oder die Kühlflüssigkeitsrückgewinnungseinrichtung zumindest eine Pumpe zum Pumpen der Kühlflüssigkeit in das Granulierbecken aufweist.

Damit kann ein Kreislauf der Kühlflüssigkeit erzeugt werden, der einen Verbrauch der Kühlflüssigkeit reduziert oder sogar verhindert. Es kann auch vorgesehen sein, dass die Kühlflüssigkeit vor der Rückspeisung in das Granulierbecken und/oder die Kühlleitung durch eine Kühlung gekühlt wird.

Bevorzugt kann auch vorgesehen sein, dass die Trenneinrichtung eine kontinuierliche Trennung der Granalien von der Kühlflüssigkeit ermöglicht, wobei bevorzugt die Trenneinrichtung ein Gitter und/oder ein Sieb aufweist, wobei besonders bevorzugt das Sieb ein Rüttelsieb und/oder ein ultraschallunterstütztes Siebgewebe aufweist.

Hiermit kann der Prozess kontinuierlich gestaltet werden und die Granalien können fortlaufend im Durchlaufbetrieb erzeugt werden.

Des Weiteren kann vorgesehen sein, dass die Vorrichtung eine Trocknungseinrichtung aufweist, die die durch die Trenneinrichtung von der Kühlflüssigkeit getrennten Granalien trocknet, wobei bevorzugt die Trocknungseinrichtung zumindest eine Infrarotlampe und/oder zumindest ein Heißluftgebläse aufweist.

Damit kann verhindert werden, dass größere Mengen der Kühlflüssigkeit an den abgeschiedenen Granalien haften, beziehungsweise dass die Kühlflüssigkeit zusammen mit den Granalien abgepackt wird.

Ferner kann vorgesehen sein, dass die Vorrichtung eine Abfülleinrichtung zum automatischen Abfüllen der von der Kühlflüssigkeit getrennten Granalien in dazu vorgesehene Behälter aufweist, wobei die Abfülleinrichtung mit der Trenneinrichtung verbunden ist, wobei bevorzugt die Trocknungseinrichtung, sofern vorhanden, zwischen der Trenneinrichtung und der Abfülleinrichtung angeordnet ist.

Dadurch können die mit der Vorrichtung hergestellten Granalien abgepackt werden und sind für die weitere Verwendung transportfähig.

Gemäß einer bevorzugten Weiterbildung kann vorgesehen sein, dass in dem Granulierbecken und/oder an dem Abfluss und/oder in dem Abfluss wenigstens ein Kühlflüssigkeits-Einlass zum Erzeugen einer Strömung der Kühlflüssigkeit aus dem Granulierbecken in die Kühlleitung angeordnet ist, wobei vorzugsweise der wenigstens eine Kühlflüssigkeits-Einlass derart angeordnet ist, dass die Strömung der Kühlflüssigkeit zumindest bereichsweise über den Boden des Granulierbeckens streicht.

Hiermit können sich auf dem Boden des Granulierbeckens sammelnde Granalien in die Kühlleitung gespült werden, so dass diese nicht ungewollt in dem Granulierbecken zurückbleiben. Der wenigstens eine Kühlflüssigkeits-Einlass zum Erzeugen einer Strömung der Kühlflüssigkeit aus dem Granulierbecken in die Kühlleitung kann bevorzugt als wenigstens eine Düse ausgeformt sein.

Auch kann vorgesehen sein, dass der Boden des Granulierbeckens trichterförmig ist, und der Abfluss an einer tiefsten Stelle des trichterförmigen Bodens in die Kühlleitung mündet.

Hierdurch werden die Granalien, die eine höhere Dichte als die Kühlflüssigkeit haben, aufgrund der Gravitation von alleine in die Kühlleitung gelangen.

Des Weiteren kann vorgesehen sein, dass der Strömungsantrieb zum Antreiben der zirkularen Strömung der Kühlflüssigkeit in dem Granulierbecken derart angeordnet und eingerichtet ist, dass in dem Granulierbecken eine turbulenzarme Abkühlzone in der Kühlflüssigkeit erzeugt wird.

Hierdurch können die Granalien eingerundet werden, ohne dass dies durch viele Kollisionen der Granalien verhindert würde und ohne dass die Granalien in großen Mengen verklumpen.

Die der vorliegenden Erfindung zugrundeliegenden Aufgaben werden auch gelöst durch ein Verfahren zur Herstellung eines Granulats aus einer Metallschmelze, mit den Schritten:
A) Herstellen der Metallschmelze,
B) Zerstäuben oder Vereinzeln der Metallschmelze zu einzelnen Tropfen,
C) Erstarren der Tropfen in einer Kühlflüssigkeit zu Granalien und Kühlen der Granalien in der Kühlflüssigkeit, wobei die Kühlflüssigkeit zirkular in einem Granulierbecken strömt,
D) Fördern und weiteres Kühlen der Granalien in der Kühlflüssigkeit in einer Kühlleitung, wobei eine lineare Strömung in der Kühlleitung angetrieben wird, und
E) Trennen der Granalien von der Kühlflüssigkeit.

Die Metallschmelze kann zur Herstellung der Granalien erfindungsgemäß bevorzugt über ein separates Düsensystem in das Granulierbecken abgegossen werden.

Bevorzugt kann vorgesehen sein, dass das Verfahren mit einer erfindungsgemäßen Vorrichtung durchgeführt wird.

Das Verfahren weist dann die zu der Vorrichtung angegebenen Vorteile und Eigenschaften auf.

Des Weiteren kann vorgesehen sein, dass nach Schritt E) die Kühlflüssigkeit von Feststoffresten getrennt oder befreit wird und dem Granulierbecken und/oder der Kühlleitung wieder zugeführt wird.

Hiermit wird verhindert, dass sich in der Kühlflüssigkeit immer mehr oder zu viele Feststoffreste ansammeln, die die Leitung und die Kühlleistung der Kühlflüssigkeit negativ beeinflussen könnten. Zu diesem Zweck kann in der Vorrichtung eine Reinigungseinrichtung für die Kühlflüssigkeit angeordnet sein, die in einer Rückführleitung zwischen der Trenneinrichtung und zumindest einer Öffnung für die Kühlflüssigkeit in dem Granulierbecken und/oder zumindest eine Öffnung für die Kühlflüssigkeit in der Kühlleitung angeordnet ist. Hierzu können beispielsweise Abscheider, Zentrifugen, Siebe und/oder Filter eingesetzt werden.

Ferner kann vorgesehen sein, dass die Strömung in Schritt D) stärker ist als in Schritt C), wobei bevorzugt die Strömung in Schritt D) von einem Kühlflüssigkeitsstrom beschleunigt wird, der in die Kühlleitung eingeleitet oder eingespritzt wird, besonders bevorzugt in einen Rohrbogen der Kühlleitung eingeleitet oder eingespritzt wird.

Hiermit wird erreicht, dass die Granalien zunächst in Schritt C) langsamer erstarren und so eine runde Form annehmen können, insbesondere eine kugelförmige Form annehmen können, die später leichter prozessierbar ist, während die Granalien, nachdem sie ihre runde Form oder kugelrunde Form in Schritt C) erhalten haben, in Schritt D) mit einer höheren Leistung gekühlt werden können.

Es kann auch vorgesehen sein, dass nach Schritt E) die von der Kühlflüssigkeit getrennten Granalien zu einer Abfüllanlage gefördert werden, wobei bevorzugt die Granalien dabei getrocknet werden, insbesondere mit Infrarotstrahlung oder mit einem heißen Luftstrom getrocknet werden.

Hierdurch wird der Transport und die Weiterverarbeitung der Granalien für nachfolgende Prozesse vereinfacht.

Auch kann vorgesehen sein, dass die Schritte A) und B) in einer Inertgasatmosphäre durchgeführt werden.

Hierdurch kann eine chemische Reaktion der Metallschmelze mit der umgebenden Atmosphäre verhindert werden, bevor die Metallschmelze in die Kühlflüssigkeit eingeleitet ist.

Bevorzugt kann auch vorgesehen sein, dass als Metallschmelze eine Edelmetallschmelze enthaltend zumindest ein Edelmetall verwendet wird und die erzeugten Granalien das zumindest eine Edelmetall enthalten, wobei bevorzugt die Edelmetallschmelze und die Granalien zu mindestens 50 Atom% aus dem zumindest einen Edelmetall bestehen, besonders bevorzugt zu mindestens 50 Atom% aus Platin oder Palladium bestehen, ganz besonders bevorzugt zu mindestens 99 Atom% aus Platin, PtRh10 oder Palladium oder einer Platin-Wolfram-Legierung bestehen.

Das erfindungsgemäße Verfahren ist für Edelmetalle besonders vorteilhaft einsetzbar, da die Herstellung über Module erfolgen kann und dadurch die einzelnen Teile auch im Havariefall gut zugänglich und austauschbar sind. Zudem können mit dem erfindungsgemäßen Verfahren gut auch kleinere Mengen der Granalien hergestellt werden.

Der Erfindung liegt die überraschende Erkenntnis zugrunde, dass es durch die Verwendung einer Kühlleitung zum Fördern und Kühlen der in einer Kühlflüssigkeit mitgeführten Granalien gelingt, die Granalien nach dem langsamen Erstarren in der Kühlflüssigkeit zum Formen möglichst abgerundeter Granalien anschließend während des Transports schneller abzukühlen und so ein Verklumpen und/oder eine Verformung der Granalien zu verhindern, und gleichzeitig eine kompakte Bauweise zur kostengünstigen Herstellung der Granalien sicherzustellen. Als Ergebnis erhält man auf kostengünstige Weise ein Granulat ohne oder nur mit geringen Verklumpungen, bei dem die Granalien weitgehend rund und/oder gleichmäßig geformt sind. Die Vorrichtung hat zudem den Vorteil, dass sie modular aufgebaut ist beziehungsweise aufgebaut werden kann und dadurch ein Tausch einzelner Komponenten schnell und ohne großen Aufwand erfolgen kann. Dadurch können die Vorrichtung und das Verfahren schnell und ohne großen Aufwand zur Herstellung anderer Granulate angepasst werden oder schnell und ohne großen Aufwand eine Reparatur der Vorrichtung nach einer Havarie durch einen auslaufenden Schmelztiegel erfolgen. Des Weiteren kann eine kontinuierliche Produktion des Granulats erfolgen.

Mit der erfindungsgemäßen Vorrichtung und dem erfindungsgemäßen Verfahren gelingt es, die Granalien automatisch, direkt aus dem Prozess während der Herstellung zu entnehmen, diese weiter zu kühlen und von der Kühlflüssigkeit abzutrennen. Die manuelle Entnahme der Granalien ist in den Prozessfluss integriert und erfolgt ohne zusätzliche personelle Unterstützung. Die Komponenten der erfindungsgemäßen Vorrichtung sind modular aufgebaut und sehr einfach gehalten. Es sind praktisch keine Einbauteile in den produktberührenden Komponenten der Vorrichtung notwendig.

Ein zentraler Vorteil der vorliegenden Erfindung ist es, dass die Prozesszeit wesentlich reduziert wird, indem die manuelle Entnahme der Granalien nach Prozessende entfällt und die Mitarbeiter erheblich entlastet werden und der Transport der Granalien und die Kühlung der Granalien teilweise gleichzeitig erfolgt. Hierdurch lassen sich Personalkosten reduzieren. Im Havariefall, zum Beispiel bei einem Tiegelbruch des die Metallschmelze beinhaltenden Tiegels, können Komponenten durch den modularen Aufbau leicht ausgewechselt werden und es muss nicht die komplette Komponente in die Nacharbeit um beispielsweise Edelmetall wieder zurückzugewinnen. Auf diese Weise entfällt die zeitaufwendige Entnahme der Granalien und Reinigung der Granulierungseinheit. Durch die integrierte und kontinuierliche Granalienentnahme aus dem Prozess entfällt diese vollständig.

Reinigungsarbeiten sind durch den ermöglichten modularen Aufbau und die geringe Größe der Komponenten deutlich einfacher und könnten durch Verwendung produktspezifischer Komponenten zum Teil auch einfach entfallen.

Die Granalien stehen nach Prozessende von Kühlflüssigkeit befreit und gegebenenfalls vorgetrocknet zur weiteren Bearbeitung bereit.

Die Vorrichtung und das Verfahren sind auf eine Vielzahl von Granuliervorrichtungen und Granulierverfahren für unterschiedliche Granulate und Materialien anwendbar und übertragbar.

In einem trichterförmig ausgeführten Boden des Granulierbeckens können die entstandenen Granalien in der Mitte aufgefangen werden. Über einen angesetzten Rohrbogen, in den ein starker Wasserstrahl eingeleitet wird, können die Granalien hydraulisch nach oben transportiert werden. Die Kühlleitung kann parallel zum Transport als Abkühlstrecke für die Granalien genutzt werden, um diese weiter abzukühlen.

Über ein Rüttelsieb oder ein ultraschallunterstütztes Sieb als Trenneinrichtung können die Granalien aus dem Wasserstrom abgetrennt und automatisch in bereitstehende Behälter abgefüllt werden. Die Rüttelstrecke kann verlängert werden und für weitere Vortrocknungen zum Beispiel durch Infrarotlampen oder durch Heißluft genutzt werden.

Mit der erfindungsgemäßen Vorrichtung und dem erfindungsgemäßen Verfahren können eine Optimierung der Granalienerzeugung durch eine variable, nach individueller Anforderung anpassbare Düseneinheit und eine turbulenzarme Abkühlzone ohne Stauzonen realisiert werden.

Im Folgenden werden Ausführungsbeispiele der Erfindung anhand von zwei Figuren erläutert, ohne jedoch dabei die Erfindung zu beschränken. Dabei zeigt:
Figur 1: eine schematische Zeichnung einer beispielhaften erfindungsgemäßen Vorrichtung zum Umsetzen eines erfindungsgemäßen Verfahrens; und
Figur 2: ein Ablaufdiagramm zur Darstellung eines erfindungsgemäßen Verfahrens.

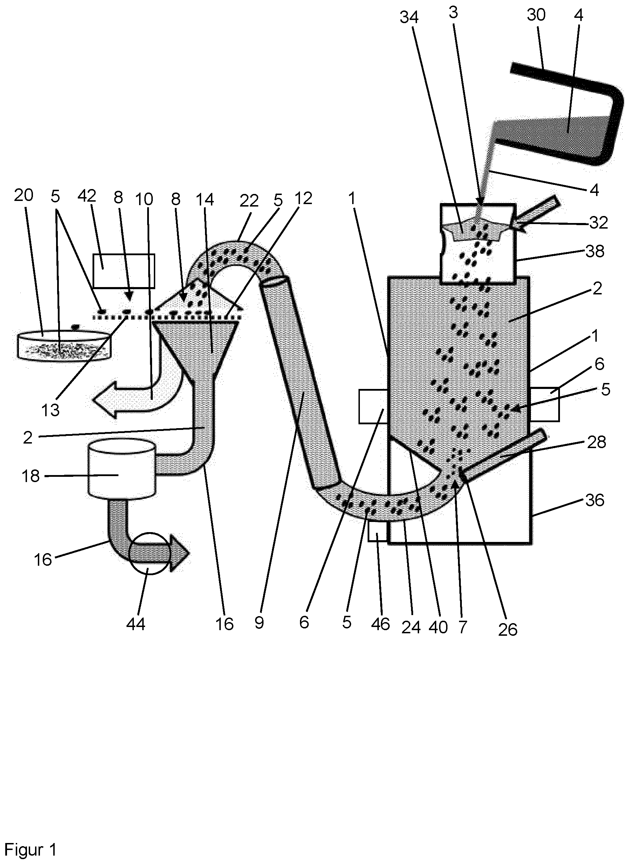

Figur 1 zeigt eine schematische Ansicht einer erfindungsgemäßen Vorrichtung zum Umsetzen eines erfindungsgemäßen Verfahrens in Form einer schematischen Zeichnung.

Die Vorrichtung weist ein Granulierbecken 1 auf, in dem im Betrieb der Vorrichtung eine Kühlflüssigkeit 2 enthalten ist. Als Kühlflüssigkeit 2 kann vorzugsweise Wasser verwendet werden. Das Granulierbecken 1 kann beispielsweise aus Edelstahl bestehen.

In das Granulierbecken 1 kann durch eine Einmündung 3 eine Metallschmelze 4 eingefüllt werden. Die Metallschmelze 4 kann mit einem induktiven Schmelzverfahren hergestellt werden.

Wenn Tropfen der Metallschmelze 4 in die Kühlflüssigkeit 2 eintreten, erstarren diese in der Kühlflüssigkeit 2 und so entstehen Granalien 5, die in der Kühlflüssigkeit 2 von der Kühlflüssigkeit 2 mitgeschwemmt werden. Die Kühlflüssigkeit 2 kann mit zwei Strömungsantrieben 6 zu einer zirkularen Strömung in dem Granulierbecken 1 angetrieben werden. Die Strömungsantriebe 6 können durch Kühlflüssigkeitsdüsen oder Kühlflüssigkeitseinströmöffnungen realisiert werden, die Kühlflüssigkeit 2 in tangentialer Richtung in das Granulierbecken 1 einleiten und so eine zirkulare Strömung im Granulierbecken 1 bewirken. Auf diese Weise kann also eine zirkulare Strömung im Granulierbecken 1 angetrieben werden. Die Strömungsantriebe 6 können in einem unteren Teil des Granulierbeckens 1 angeordnet sein (in Figur 1 unten). Dadurch ist die zirkulare Strömung im oberen Bereich des Granulierbeckens 1 nur sehr wenig turbulent, so dass die von oben (in Figur 1 oben) in die Kühlflüssigkeit 2 eintretenden Tropfen der Metallschmelze 4 dort nicht oder nur selten aneinanderstoßen. Aus diesem Grund entstehen dort aufgrund der Oberflächenspannung der Metalltropfen und aufgrund der geringen mechanischen Belastung der Metalltropfen in diesem Bereich kugelförmige oder kompakte runde Granalien 5.

An der Unterseite des Granulierbeckens 1 ist ein Ablauf 7 angeordnet, durch den die Kühlflüssigkeit 2 mit den darin mitgeschwemmten Granalien 5 aus dem Granulierbecken 1 ausfließen. Ausgehend von dem Ablauf 7 fließt die Kühlflüssigkeit 2 mit den mitgeschwemmten Granalien 5 durch eine Kühlleitung 9 zu einer Trenneinrichtung 8, in der die Granalien 5 von der Kühlflüssigkeit 2 getrennt werden. Während der Durchleitung der Kühlflüssigkeit 2 mit den Granalien 5 durch die Kühlleitung 9 kann die Strömungsgeschwindigkeit der Kühlflüssigkeit 2 erhöht werden, indem zusätzliche Kühlflüssigkeit 2 in die Kühlleitung 9 in Flussrichtung eingespritzt wird. Hierdurch können die Granalien 5 beim Transport durch die Kühlleitung 9 weiter abgekühlt werden, so dass sie später weniger anfällig sind für Verformungen und Verklumpungen. In der Trenneinrichtung 8 kann eine Absaugung 10 vorgesehen sein, mit der Restflüssigkeit und Kleinstpartikel abgesaugt werden, um diese von den Granalien 5 zu entfernen. Die Trenneinrichtung 8 kann ein Rüttelsieb 12 und ein gitterartiges oder Kühlflüssigkeitsdurchlässiges Förderband 13 aufweisen, mit denen die Kühlflüssigkeit 2 von der Granalien 5 getrennt wird, wobei die Granalien 5 auf dem Förderband 13 weitergeleitet werden. Das Förderband 13 kann ebenfalls als Rüttelsieb ausgebildet sein.

Die in der Trenneinrichtung 8 abgetrennte Kühlflüssigkeit 2 kann rückgewonnen werden, indem sie mit einem Auffangtrichter 14 aufgefangen und durch eine Rückführleitung 16 wieder dem Granulierbecken 1 und/oder der Kühlleitung 9 zugeführt wird. Kleine Partikel und Fremdstoffe können mit einem Abscheider 18 und/oder einer Zentrifuge aus der rückgewonnenen Kühlflüssigkeit 2 entfernt werden. Hierzu kann der Abscheider 18 und/oder die Zentrifuge in der Rückführleitung 16 angeordnet sein.

Die von der Kühlflüssigkeit 2 getrennten Granalien 5 können über das Förderband 13 zu einem Behälter 20 zum Auffangen der Granalien 5 gefördert werden. Die Granalien 5 können in dem Behälter 20 verpackt und anschließend transportiert werden. Die Kühlleitung 9 weist zwei Rohrbögen 22, 24 auf, wobei ein vorderer Rohrbogen 24 direkt an den Abfluss 7 am Granulierbecken 1 angeschlossen ist und ein hinterer Rohrbogen 22 in die Trenneinrichtung 8 mündet und wobei zwischen den beiden Rohrbögen 22, 24 ein gerades Rohrstück angeordnet sein kann. In dem geraden Rohrstück kann die Kühlflüssigkeit 2 mit den Granalien 5 gegen die Gravitation nach oben zur Trenneinrichtung 8 gepumpt werden. Hierzu kann eine Pumpe (nicht gezeigt) in der Kühlleitung 9 angeordnet sein oder es können Öffnungen beziehungsweise Düsen zum Einspritzen von Kühlflüssigkeit 2 in die Kühlleitung 9 in Richtung der Trenneinrichtung 8 vorgesehen sein.

Im Bereich des Abflusses 7 kann ein Kühlflüssigkeits-Einlass 26 angeordnet sein, der über eine Kühlflüssigkeitszuleitung 28 mit einer Quelle für frische Kühlflüssigkeit 2 (nicht gezeigt) und/oder mit der Rückführleitung 16 verbunden ist, um die Kühlflüssigkeit 2 einzuspritzen. Mit der Einspritzung der Kühlflüssigkeit 2 durch den Kühlflüssigkeits-Einlass 26 wird die Strömung der Kühlflüssigkeit 2 in der Kühlleitung 9 angetrieben und verstärkt. Durch die höhere Strömungsgeschwindigkeit und durch die beim Einspritzen auftretenden Turbulenzen werden die Granalien 5 in der Kühlleitung 9 stärker gekühlt als in dem Granulierbecken 1. Gleichzeitig werden die Granalien 5 in der Kühlleitung 9 einer höheren mechanischen Belastung ausgesetzt, was diese durch die schonende Vorkühlung im Granulierbecken 1 und die dadurch bereits erreichte Verfestigung aber problemlos aushalten, ohne ihre kugelförmige oder abgerundete Form zu verlieren und ohne miteinander zu verklumpen.

Die Metallschmelze 4 kann in einem Tiegel 30 geschmolzen werden und/oder aus dem Tiegel 30 durch die Einmündung 3 in das Granulierbecken 1 gegossen werden. Im Bereich der Einmündung 3 kann eine Kühlflüssigkeitsdüse 32 angeordnet sein, die einen Sprühkegel 34 der Kühlflüssigkeit 2 erzeugt, mit dem ein Strahl der eingegossenen Metallschmelze 4 zerstäubt oder zumindest in Tropfen getrennt werden kann, bevor die Metallschmelze 4 in die Kühlflüssigkeit 2 im Granulierbecken 1 tropft.

Unter dem vorderen Rohrbogen 24 kann ein Havariebehälter 36 zur Aufnahme der Metallschmelze 4 im Havariefall angeordnet sein. Der vordere Rohrbogen 24 kann als dünnwandiger nur etwa 1 mm starker Kupferrohrbogen oder als Rohrbogen 24 aus einem anderen, bei niedrigen Temperaturen schmelzenden Material wie Kunststoff oder Aluminium ausgeführt sein, damit die Metallschmelze 4 im Havariefall sich durch den dünnwandigen Kupferrohrbogen oder niedrigschmelzenden Rohrbogen frisst und von dem Havariebehälter 36 aufgefangen werden kann.

Um die Metallschmelze 4 vor dem Eintritt in die Kühlflüssigkeit 2 vor einer Oxidation oder einer anderen chemischen Reaktion mit umgebenden Gasen zu schützen, kann ein Außenrohr 38 um den Sprühkegel 34 herum angeordnet sein, das nach unten durch die Kühlflüssigkeit 2 abgedichtet ist und das nach oben geschlossen sein kann. In dem Außenrohr 38 und in den Zuleitungen zum Einleiten der Metallschmelze 4 kann zu diesem Zweck auch eine Inertgasatmosphäre erzeugt werden, die eine Reaktion mit der Metallschmelze 4 verhindert.

Das Granulierbecken 1 kann einen trichterförmigen Boden 40 aufweisen, in dessen Mitte, die vorzugsweise die tiefste Stelle des Granulierbeckens 1 bildet, der Abfluss 7 angeordnet ist. Durch den trichterförmigen Boden 40 können darauf fallende Granalien 5 leicht durch den Abfluss 7 in die Kühlleitung 9 geleitet werden und es kann ein Sog der Kühlflüssigkeit erzeugt werden, mit dem die Kühlflüssigkeit 2 und die Granalien 5 darin in den Abfluss und in die Kühlleitung 9 gesaugt werden. Durch den kompakten Aufbau kann ein geringeres Volumen an benötigter Kühlflüssigkeit 2 verwendet werden. Auf diese Weise können ca. 50% bis 60% der üblicher Weise benötigen Menge an Kühlflüssigkeit 2 ausreichen.

Im Bereich des Förderbands 13 der Trenneinrichtung 8 kann eine Trocknungseinrichtung 42 in Form eines Infrarotstrahlers und/oder eines Heißluftgebläses angeordnet sein, wobei mit der Trocknungseinrichtung 42 die Granalien 5 vor dem Einfüllen in den Behälter 20 getrocknet und von Kühlflüssigkeit befreit werden können.

Eine Pumpe 44 kann vorgesehen sein, um die Kühlflüssigkeit 2 in der Rückführleitung 16 anzutreiben und um die Kühlflüssigkeit 2 mit dem notwendigen Druck in das Granulierbecken 1 und/oder die Kühlleitung 9 einzuspritzen. Hierzu ist die Pumpe 44 vorzugsweise in Strömungsrichtung der rückgeführten Kühlflüssigkeit 2 hinter dem Abscheider 18 und/oder der Zentrifuge angeordnet.

Die hinter der Trenneinrichtung 8 rückgewonnene Kühlflüssigkeit 2 kann durch die Strömungsantriebe 6 in das Granulierbecken 1, durch den Kühlflüssigkeitseinlass 26 in den Abfluss 7, in den Rohrbogen 24 und in die Kühlleitung 9 und durch eine Einlassöffnung 46 in den Rohrbogen 24 und die Kühlleitung 9 wieder eingespeist werden, um dort die entsprechenden Strömungen der Kühlflüssigkeit 2 mit den Granalien 5 darin anzutreiben.

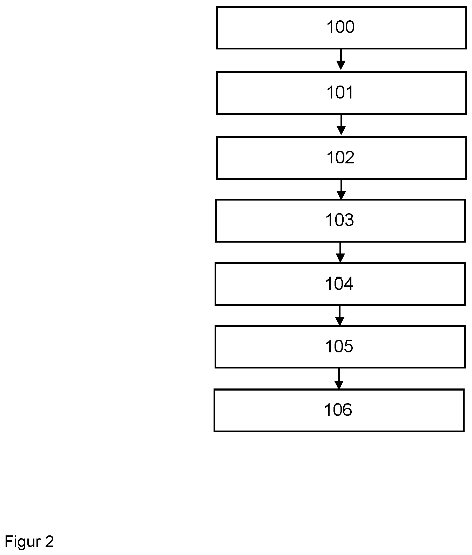

Im Folgenden wird anhand von Figur 2 der Ablauf eines beispielhaften erfindungsgemäßen Verfahrens geschildert, das mit einer Vorrichtung nach Figur 1 umgesetzt wird.

In einem ersten Arbeitsschritt 100 kann eine Metallschmelze 4 erzeugt werden, beispielsweise indem die Ausgangsmaterialien induktiv geschmolzen und gegebenenfalls miteinander legiert werden.

In einem zweiten Arbeitsschritt 101 kann die Metallschmelze 4 zu Tropfen vereinzelt werden, beispielsweise indem ein Strahl der Metallschmelze 4 mit dem Sprühkegel 34 der Kühlflüssigkeitsdüse 32 zerstäubt wird oder indem er auf eine Prallplatte geleitet wird.

In einem dritten Arbeitsschritt 102 können die vereinzelten Tropfen der Metallschmelze 4 in der zirkular rotierenden Kühlflüssigkeit 2 im Granulierbecken 1 bei geringer Strömungsgeschwindigkeit der Kühlflüssigkeit 2 und bei geringen Turbulenzen zu kugelförmigen und/oder kompakten runden Granalien 5 erstarren.

In einem vierten Arbeitsschritt 103 können die Granalien 5 im unteren Bereich des Granulierbeckens 1 mit einer stärkeren Strömung und damit mit einer stärkeren Kühlung mit der Kühlflüssigkeit 2 durch den Abfluss 7 in die Kühlleitung 9 fließen. Dabei kann die Strömung in den vorderen Rohrbogen 24 mit Hilfe der Kühlflüssigkeitsströmung aus dem Kühlflüssigkeits-Einlass 24 angetrieben werden. Durch das Abfließen der Kühlflüssigkeit 2 kann ein Sog entstehen, mit dem die Granalien 5 in den Abfluss 7 und in die Kühlleitung 9 gesaugt werden.

In einem fünften Arbeitsschritt 104 kann die Kühlflüssigkeit 2 mit den mitgeschwemmten Granalien 5 durch die Kühlleitung 9 zu der Trenneinrichtung 8 gefördert werden, wobei die Granalien 5 durch eine stärkere und turbulentere Strömung der Kühlflüssigkeit 2 hierbei stärker gekühlt werden als in dem Granulierbecken 1.

In einem sechsten Arbeitsschritt 105 können die Granalien 5 in der Trenneinrichtung 8 von der Kühlflüssigkeit 2 getrennt werden. Optional können die Granalien 5 mit der Trocknungseinrichtung 42 getrocknet werden. Ebenfalls optional können die Granalien 5 in Behälter 20 gefüllt werden.

In einem optionalen siebten Arbeitsschritt 106 kann die Kühlflüssigkeit 2 nach dem Trennen von den Granalien 5 in der Trenneinrichtung 8 aufgefangen, gesammelt und über die Rückführleitung 16 dem Prozess wieder zugeführt werden. Optional können hierbei Verunreinigungen mit dem Abscheider 18 aus der Kühlflüssigkeit 2 entfernt werden.

Die in der voranstehenden Beschreibung sowie den Ansprüchen, Figuren und Ausführungsbeispielen offenbarten Merkmale der Erfindung können sowohl einzeln, als auch in jeder beliebigen Kombination für die Verwirklichung der Erfindung in ihren verschiedenen Ausführungsformen wesentlich sein.

### Bezugszeichenliste

- 1: Granulierbecken
- 2: Kühlflüssigkeit / Wasser
- 3: Einmündung
- 4: Metallschmelze
- 5: Granalien
- 6: Strömungsantrieb
- 7: Abfluss
- 8: Trenneinrichtung
- 9: Kühlleitung
- 10: Absaugung
- 12: Rüttelsieb
- 13: Förderband
- 14: Auffangtrichter
- 16: Rückführleitung
- 18: Abscheider
- 20: Behälter
- 22: Rohrbogen
- 24: Rohrbogen
- 26: Kühlflüssigkeits-Einlass
- 28: Kühlflüssigkeitszuleitung
- 30: Tiegel
- 32: Kühlflüssigkeitsdüse
- 34: Sprühkegel
- 36: Havariebehälter
- 38: Außenrohr
- 40: Boden
- 42: Trocknungseinrichtung
- 44: Pumpe
- 46: Einlassöffnung
- 100: erster Arbeitsschritt
- 101: zweiter Arbeitsschritt
- 102: dritter Arbeitsschritt
- 103: vierter Arbeitsschritt
- 104: fünfter Arbeitsschritt
- 105: sechster Arbeitsschritt
- 106: siebter Arbeitsschritt

## Patentansprüche

**1.** Vorrichtung zum Granulieren von Metallen und Metalllegierungen, die Vorrichtung aufweisend
ein Granulierbecken (1) zur Aufnahme einer Kühlflüssigkeit (2), wobei eine Kühlflüssigkeit (2) in dem Granulierbecken (1) angeordnet ist oder in das Granulierbecken (1) einfüllbar ist,
eine Einmündung (3) zum Einleiten einer Metallschmelze (4) in das Granulierbecken (1), so dass die Metallschmelze (4) in die Kühlflüssigkeit (2) in dem Granulierbecken (1) einleitbar ist und Granalien (5) durch Erstarren der Metallschmelze (4) in der Kühlflüssigkeit (2) herstellbar sind,
einen Strömungsantrieb (6) zum Antreiben einer zirkularen Strömung der Kühlflüssigkeit (2) in dem Granulierbecken (1),
einen Abfluss (7), der an einem Boden (40) des Granulierbeckens (1) angeordnet ist,
eine Trenneinrichtung (8) zum Trennen der Granalien (5) von der Kühlflüssigkeit (2), und
eine Kühlleitung (9) zum weiteren Abkühlen der Granalien (5) in der Kühlflüssigkeit (2) und zum Leiten der Kühlflüssigkeit (2) und der von der Kühlflüssigkeit (2) mitgeschwemmten Granalien (5) von dem Granulierbecken (1) zur Trenneinrichtung (8), wobei die Kühlleitung (9) über den Abfluss (7) mit dem Granulierbecken (1) für die Kühlflüssigkeit (2) und die Granalien (5) durchlässig verbunden ist und wobei die Kühlleitung (9) in die Trenneinrichtung (8) mündet.

**2.** Vorrichtung nach Anspruch 1, **dadurch gekennzeichnet, dass** die Kühlleitung (9) zumindest 0,5 m lang ist, bevorzugt zumindest 1 m lang ist, besonders bevorzugt zwischen 1 m und 3 m lang ist.

**3.** Vorrichtung nach einem der vorangehenden Ansprüche, **dadurch gekennzeichnet, dass**
die Vorrichtung eine Antriebseinrichtung zum Antreiben einer linearen Strömung der Granalien (5) mit der Kühlflüssigkeit (2) durch die Kühlleitung (9) aufweist, wobei bevorzugt die Antriebseinrichtung zumindest ein in die Kühlleitung (9) eingespeister Kühlflüssigkeitsstrom, eine Pumpe und/oder ein Gefälle der Kühlleitung (9) ist.

**4.** Vorrichtung nach einem der vorangehenden Ansprüche, **dadurch gekennzeichnet, dass**
die Vorrichtung aufweisend eine Vereinzelungseinrichtung mit der die Metallschmelze (4) vor, während oder unmittelbar nach dem Einfließen in die Kühlflüssigkeit (2) zu vereinzeln oder zu zerstäuben ist, wobei bevorzugt die Vereinzelungseinrichtung eine Prallplatte und/oder eine Kühlflüssigkeitsdüse (32) zum Erzeugen eines Sprühkegels (34) der Kühlflüssigkeit (2) ist, wobei besonders bevorzugt die Kühlflüssigkeitsdüse (32) derart angeordnet ist, dass der Sprühkegel (34) die in das Granulierbecken (1) fließende Metallschmelze (4) trifft, bevor die Metallschmelze (4) in die Kühlflüssigkeit (2) fließt.

**5.** Vorrichtung nach Anspruch 4, **dadurch gekennzeichnet, dass** die Kühlflüssigkeitsdüse (32) von einem Außenrohr (38) umgeben ist, das oben in die Kühlflüssigkeit (2) im Granulierbecken (1) eintaucht ist und das bevorzugt nach oben bis auf die Einmündung (3) gasdicht verschlossen oder verschließbar ist.

**6.** Vorrichtung nach einem der vorangehenden Ansprüche, **dadurch gekennzeichnet, dass**
das Granulierbecken (1) oder ein Raum über dem Granulierbecken (1) geschlossen ist oder verschließbar ist und in dem Granulierbecken (1) oder in dem Raum über dem Granulierbecken (1) eine Inertgasatmosphäre erzeugbar ist, so dass in dem Granulierbecken (1) über der Kühlflüssigkeit (2) ein Inertgas angeordnet ist oder einleitbar ist, und/oder
in der Kühlleitung (9) ein Volumenstrom der Kühlflüssigkeit (2) mit den Granalien (5) von zumindest 10⁻³ m³/s erzeugbar ist, bevorzugt von zumindest 10⁻² m³/s erzeugbar ist.

**7.** Vorrichtung nach einem der vorangehenden Ansprüche, **dadurch gekennzeichnet, dass**
die Vorrichtung zusätzlich eine Schmelzeinrichtung zum Herstellen der Metallschmelze (4) aufweist, wobei bevorzugt die Schmelzeinrichtung eine induktive Schmelzeinrichtung ist, und/oder
zumindest eine Öffnung (46) zum Einleiten von Kühlflüssigkeit (2) in einer Wandung der Kühlleitung (9) angeordnet ist, wobei bevorzugt die zumindest eine Öffnung (46) an wenigstens eine Kühlflüssigkeitszuleitung (28) angeschlossen ist.

**8.** Vorrichtung nach einem der vorangehenden Ansprüche, **dadurch gekennzeichnet, dass**
in der Kühlleitung (9) zumindest ein Rohrbogen (22, 24) angeordnet ist, wobei bevorzugt der zumindest eine Rohrbogen (22, 24) oder wenigstens einer von zumindest zwei Rohrbögen (22, 24) der Kühlleitung (9) ein dünnwandiger Rohrbogen (22, 24) aus einem niedrigschmelzenden Material ist, insbesondere aus Kunststoff, Kupfer, Aluminium ist, wobei besonders bevorzugt die Stärke der Wandung des dünnwandigen Rohrbogens (22, 24) maximal 2 mm beträgt, ganz besonders bevorzugt 1 mm beträgt, und
wobei vorzugsweise der zumindest eine Rohrbogen (22, 24) zwischen dem Granulierbecken (1) und einem geraden oder weniger stark gebogenen Teilstück der Kühlleitung (9) angeordnet ist, wobei in einer Wandung wenigstens eines Rohrbogens (22, 24) des zumindest einen Rohrbogens (22, 24) eine Einlassöffnung (46) zum Einleiten oder Einspritzen von Kühlflüssigkeit (2) angeordnet ist, wobei mit der eingeleiteten oder eingespritzten Kühlflüssigkeit (2) der Volumenstrom der Kühlflüssigkeit (2) mit den Granalien (5) durch die Kühlleitung (9) anzutreiben und/oder zu beschleunigen ist.

**9.** Vorrichtung nach einem der vorangehenden Ansprüche, **dadurch gekennzeichnet, dass**
die Vorrichtung eine Kühlflüssigkeitsrückgewinnungseinrichtung aufweist, die mit der Trenneinrichtung (8) und dem Granulierbecken (1) verbunden ist, wobei bevorzugt in der Kühlflüssigkeitsrückgewinnungseinrichtung einen Abscheider (18), insbesondere einen Zyklonabscheider, und/oder eine Zentrifuge zum Abscheiden von Partikeln aus der Kühlflüssigkeit (2) aufweist und/oder die Kühlflüssigkeitsrückgewinnungseinrichtung zumindest eine Pumpe (44) zum Pumpen der Kühlflüssigkeit (2) in das Granulierbecken (1) aufweist, und/oder die Trenneinrichtung (8) eine kontinuierliche Trennung der Granalien (5) von der Kühlflüssigkeit (2) ermöglicht, wobei bevorzugt die Trenneinrichtung (8) ein Gitter und/oder ein Sieb aufweist, wobei besonders bevorzugt das Sieb ein Rüttelsieb (12) und/oder ein ultraschallunterstütztes Siebgewebe aufweist, und/oder
die Vorrichtung eine Trocknungseinrichtung (42) aufweist, die die durch die Trenneinrichtung (8) von der Kühlflüssigkeit (2) getrennten Granalien (5) trocknet, wobei bevorzugt die Trocknungseinrichtung (42) zumindest eine Infrarotlampe und/oder zumindest ein Heißluftgebläse aufweist.

**10.** Vorrichtung nach einem der vorangehenden Ansprüche, **dadurch gekennzeichnet, dass**
die Vorrichtung eine Abfülleinrichtung zum automatischen Abfüllen der von der Kühlflüssigkeit (2) getrennten Granalien (5) in dazu vorgesehene Behälter (20) aufweist, wobei die Abfülleinrichtung mit der Trenneinrichtung (8) verbunden ist, wobei bevorzugt die Trocknungseinrichtung (42), sofern vorhanden, zwischen der Trenneinrichtung (8) und der Abfülleinrichtung angeordnet ist, und/oder in dem Granulierbecken (1) und/oder an dem Abfluss (7) und/oder in dem Abfluss (7) wenigstens ein Kühlflüssigkeits-Einlass (26) zum Erzeugen einer Strömung der Kühlflüssigkeit (2) aus dem Granulierbecken (1) in die Kühlleitung (9) angeordnet ist, wobei vorzugsweise der wenigstens eine Kühlflüssigkeits-Einlass (26) derart angeordnet ist, dass die Strömung der Kühlflüssigkeit (2) zumindest bereichsweise über den Boden (40) des Granulierbeckens (1) streicht.

**11.** Vorrichtung nach einem der vorangehenden Ansprüche, **dadurch gekennzeichnet, dass**
der Boden (40) des Granulierbeckens (1) trichterförmig ist, und der Abfluss (7) an einer tiefsten Stelle des Bodens (40) in die Kühlleitung (9) mündet, und/oder der Strömungsantrieb (6) zum Antreiben der zirkularen Strömung der Kühlflüssigkeit (2) in dem Granulierbecken (1) derart angeordnet und eingerichtet ist, dass in dem Granulierbecken (1) eine turbulenzarme Abkühlzone in der Kühlflüssigkeit (2) erzeugt wird.

**12.** Verfahren zur Herstellung eines Granulats aus einer Metallschmelze (4), **gekennzeichnet durch** die Schritte:
A) Herstellen der Metallschmelze (4),
B) Zerstäuben oder Vereinzeln der Metallschmelze (4) zu einzelnen Tropfen,
C) Erstarren der Tropfen in einer Kühlflüssigkeit (2) zu Granalien (5) und Kühlen der Granalien (5) in der Kühlflüssigkeit (2), wobei die Kühlflüssigkeit (2) zirkular in einem Granulierbecken (1) strömt,
D) Fördern und weiteres Kühlen der Granalien (5) in der Kühlflüssigkeit (2) in einer Kühlleitung (9), wobei eine lineare Strömung in der Kühlleitung (9) angetrieben wird, und
E) Trennen der Granalien (5) von der Kühlflüssigkeit (2).

**12.** Verfahren nach Anspruch 11, **dadurch gekennzeichnet, dass** das Verfahren mit einer Vorrichtung nach einem der Ansprüche 1 bis 11 durchgeführt wird.

**13.** Verfahren nach Anspruch 11 oder 12, **dadurch gekennzeichnet, dass**
nach Schritt E) die Kühlflüssigkeit (2) von Feststoffresten getrennt oder befreit wird und dem Granulierbecken (1) und/oder der Kühlleitung (9) wieder zugeführt wird, und/oder
die Strömung in Schritt D) stärker ist als in Schritt C), wobei bevorzugt die Strömung in Schritt D) von einem Kühlflüssigkeitsstrom beschleunigt wird, der in die Kühlleitung (9) eingeleitet oder eingespritzt wird, besonders bevorzugt in einen Rohrbogen (22, 24) der Kühlleitung (9) eingeleitet oder eingespritzt wird.

**14.** Verfahren nach einem der Ansprüche 11 bis 13, **dadurch gekennzeichnet, dass** nach Schritt E) die von der Kühlflüssigkeit (2) getrennten Granalien (5) zu einer Abfüllanlage gefördert werden, wobei bevorzugt die Granalien (5) dabei getrocknet werden, insbesondere mit Infrarotstrahlung oder mit einem heißen Luftstrom getrocknet werden, und/oder
die Schritte A) und B) in einer Inertgasatmosphäre durchgeführt werden.

**15.** Verfahren nach einem der Ansprüche 11 bis 14, **dadurch gekennzeichnet, dass** als Metallschmelze (4) eine Edelmetallschmelze enthaltend zumindest ein Edelmetall verwendet wird und die erzeugten Granalien (5) das zumindest eine Edelmetall enthalten, wobei bevorzugt die Edelmetallschmelze und die Granalien (5) zu mindestens 50 Atom% aus dem zumindest einen Edelmetall bestehen, besonders bevorzugt zu mindestens 50 Atom% aus Platin oder Palladium bestehen, ganz besonders bevorzugt zu mindestens 99 Atom% aus Platin, PtRh10 oder Palladium oder einer Platin-Wolfram-Legierung bestehen.
